# EUROPEAN PATENT SPECIFICATION

(11) **EP 3 640 402 B1**
(45) Date of publication and mention of the grant of the patent: **13.07.2022**
(21) Application number: 19201864.6
(22) Date of filing: 08.10.2019
(51) Int. Cl.: E02F 5/04, E02F 5/10, E02F 5/12, H02G 1/06

(54) **VERTICAL CUTTER**
VERTIKALSCHNEIDER
DISPOSITIF DE COUPE VERTICAL

(30) Priority: 11.10.2018 IT 201800003546 U
(43) Date of publication of application: 22.04.2020
(73) Proprietor: Romboli, Roberto, 47121 Forlì FC (IT)
(72) Inventor: Romboli, Roberto, 47121 Forlì FC (IT)
(74) Representative: Modiano, Micaela Nadia

(56) References cited:
- EP-A2- 2 333 164
- US-A- 5 743 675
- US-B1- 6 457 267

## Description

The Applicant of the present patent application is also owner of EP Application N. 10192563.4 entitled "Device for burying slender elements, such as cables, pipes, ropes, chains, ducts and the like".

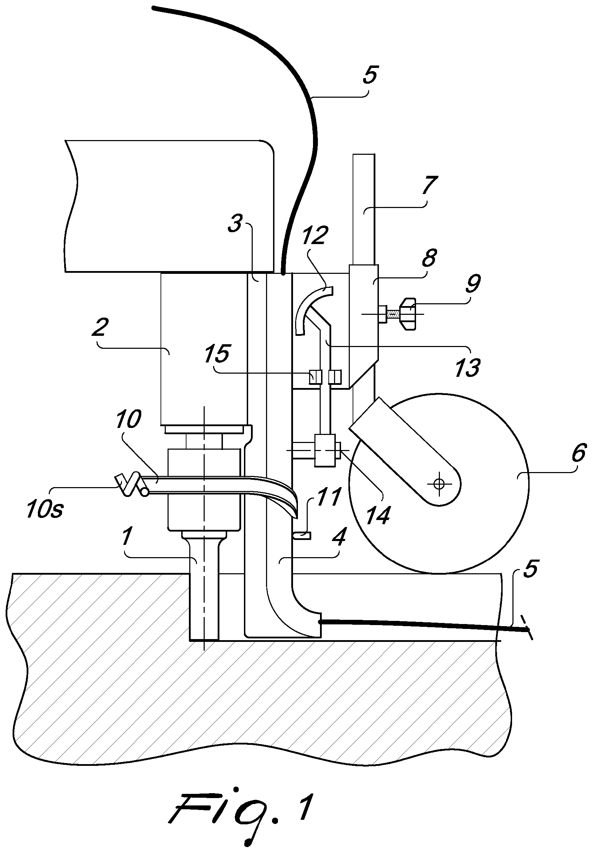

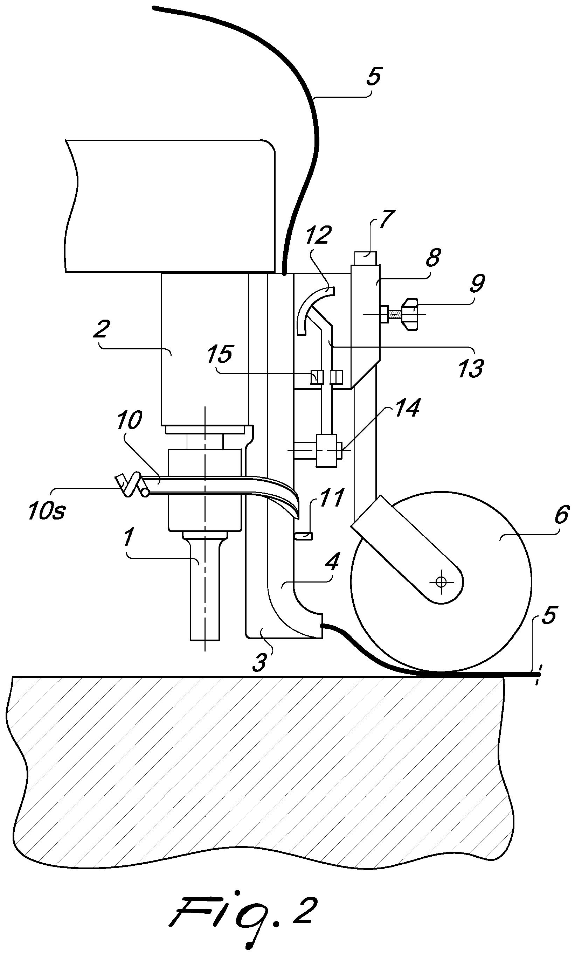

Such device, despite being usable in all circumstances in which it is necessary to provide a trench in the ground and place therein any element to be covered, restoring the previous integrity of the ground, has been devised mainly to be able to bury by a few centimeters, even in hard soils and along curved paths, the electrical cable which delimits the perimeter of the work area of lawn mower robots, i.e., of automated lawn mowers designed to operate in a fully autonomous manner within said perimeter. EP2333164 A2 is seen as the closest prior art for the subject matter of claim 1 and discloses: A motorized cutter (2) for a machine that can move on wheels, comprising a motorized cutter (3) which can rotate with respect to its own vertical axis (see dash dotted line in figure 1), containment means (6) for containing transmission elements which are integral with said motorized cutter (2), supporting means (7) for means (8,8a) for feeding and dispensing a wire or a cable (9) which can rotate freely about the axis of the motorized cutter (3), and a roller (11) having a horizontal axis (dash-dotted line of roller 11 in figure 2) for the adjustment of a height of said motorized cutter (3) with respect to a walking surface (figure 1) and therefore of a depth of a trench (5) generated by said motorized cutter (3) and for covering said trench (5) with an adjacent soil displaced by said motorized cutter (3) and accumulated in the vicinity of said trench (5), said wire or cable (9) being accommodated and conveyed by said machine.

In summary, the preceding EP application shows and describes a machine provided with wheels and with a motorized cutter which, by rotating about its own vertical axis, moves forward by tracing in the ground the trench in which adapted means, free to rotate about the vertical axis of the cutter, deposit the wire or cable that is carried by the machine and which a roller immediately covers with the soil removed previously by the cutter.

However, despite the general appreciation of operators in the field, the use of said machine is not always sufficient to prevent the need to intervene also manually in order to delimit accurately the region in which the lawn mower robot must be able to operate autonomously.

This occurs when, in the lawn to be delimited, there is a well, a tree or another fixed obstacle to be circumscribed, also with the buried electrical cable, so that the lawn mower robot is forced to change direction even before it collides against said obstacle and risks damage.

Therefore, while following the outside margin of the region to be delimited with the buried electrical cable the machine is forced occasionally to divert inward and up to the obstacle to be circumscribed before following the same path again in returning to the external perimeter.

This occurs because two portions of an electrical cable, only if they are extremely close to each other, can cancel out their respective signals, which otherwise would hinder the normal operation of the lawn mower robot, preventing it from operating in the portion of lawn located between said two portions.

Since the two portions of electrical cable that are buried along the same path must be very close to each other, only one of them can be deposited and buried by the previous machine, while the other one must be merely placed on the ground, since in order to prevent the use of the cutter from damaging the previously buried portion the excavation of the trench and the burying of the second portion must be performed with manual tools.

The aim of the present invention is to solve the described problem by providing a machine that is capable of burying automatically, simultaneously and in the same trench two contiguous portions of the electrical cable used to delimit the work area of a lawn mower robot.

Within this aim, an object of the present invention is to provide a machine that can be applied easily to the vertical cutters that are already in use and in particular even to those already provided according to the previous patent. Another object of the present invention is to provide a machine which is economical and simple as well as original and easy to provide and also to be used.

This aim and these and other objects which will become better apparent hereinafter are achieved by a machine according to claim 1.

Further characteristics and advantages of the present invention will become better apparent from the description of a preferred but not exclusive embodiment, illustrated only by way of non-limiting example in the accompanying drawings, wherein:
Figures 1, 2 and 3 are side views of the excavation assembly of the machine provided according to the invention and shown herein in three different configurations for use;
Figure 4 is a horizontal sectional view, taken along the line X-X, referred to Figure 3;
Figures 5, 6, 7 and 8 show schematically four situations of use of the machine according to the invention.

It is necessary to note first of all that the cutter of the above cited drawings derives from a vertical cutter of the type already shown and described in EP Application N. 10192563.4. As in the prior art, the one being considered also has, above the vertical motorized cutter 1 and coaxially thereto, an idler collar 2 which is free to rotate about its own axis together with a flat appendage or fin 3 which extends radially and also downward until it skims the bottom of the trench freshly provided by the motorized cutter 1 that precedes it during the advancement of the machine.

Therefore, as in the cited prior art, the movements of the motorized cutter 1 which excavated the trench, are followed constantly by said fin 3 which is provided with a duct 4 and a roller 6 having a horizontal axis. The duct 4 descends vertically along the fin and ends in a downward region with a portion that is curved backward in order to deposit on the bottom of the trench the electrical cable 5 that arrives from a spool of the machine while the roller 6, in addition to closing the trench by pressing onto the cable 5 the soil lifted by the motorized cutter 1, allows the height adjustment of said cutter with respect to the rolling surface of the roller, in order to be able to arrange it in the active or transfer configuration and also in order to be able to adjust its excavation depth.

For this purpose, the roller 6 is pivoted horizontally in a fork, the arm 7 of which can be locked, by virtue of known means 9, along the vertical guide 8 that is integral with the fin 3.

Since, as already mentioned, the aim of the present invention is to allow a vertical cutter of the known type to be improved in order to simultaneously bury in the same trench two mutually contiguous portions of electrical cable, the vertical cutter according to the invention is to be equipped so that the cable of the first portion, the one which in the outgoing leg is simply placed on the ground, can be engaged by the machine on the return leg and be guided into the trench excavated by the cutter together with the second portion that arrives from the spool of the machine and exits from the duct 4. In order to allow this, the two sliding guides 10 are fixed so as to protrude symmetrically at the two sides of the fin 3, one on the right and one on the left with respect to the travel direction, and can be used alternately depending on whether the machine is on the right or on the left of the portion of cable 5 to be engaged thereto.

Since the engagement relates to the intermediate above-ground portion of a cable 5 that is mostly buried, the sliding guides 10 necessarily have a C-shaped transverse profile in order to be able to accommodate laterally the portion after the engagement thereof in the spiral 10S that is welded in the front end of the sliding guide 10, which has a rectilinear part before curving toward the center of the trench where the cable is to be directed, passing between the prongs of a fork 11 which is fixed so as to protrude from the duct 4 and above the sliding guide 12 which, curved concentrically with respect to the nearby curved portion of the duct 4, has the C-shaped transverse profile open toward the outside of the curve and toward said duct 4 together with which the descent of the cable 5 to the inside of the trench is to be ensured.

In order to facilitate the lateral insertion of the cable 5 between the duct 4 and the guide 12, the arm 13, to which the guide is fixed, is pivoted horizontally at 14 in order to be able, if necessary, to lift it enough or even rotate it up to the retention clip 15 which, fixed on one face of the fin 3, keeps the guide 12 raised, preventing it from accumulating soil when it is not in use.

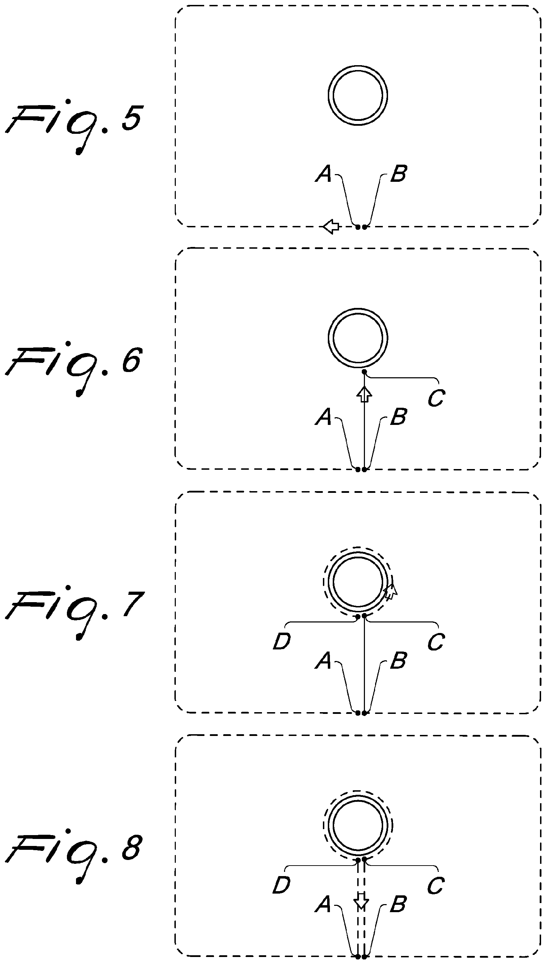

Figures 5 to 8, in which the buried electrical cable and the one placed above ground are shown respectively with a dashed line and a solid line, show an example of use of the cutter according to the invention by means of the following situations:
Figure 5 shows the cutter, in the configuration of Figure 1 and proceeding clockwise from point A to point B, that has already buried the electrical cable along the entire outside perimeter of the lawn to be delimited;
Figure 6 shows the cutter, in the configuration of Figure 2 and diverting from the outside perimeter toward the inside obstacle to be circumscribed, from point B to point C, that has deposited a portion of the electrical cable above ground;
Figure 7 shows the cutter, returned to the configuration of Figure 1 and proceeding counterclockwise from point C to point D, that has circumscribed the internal obstacle with the buried electrical cable;

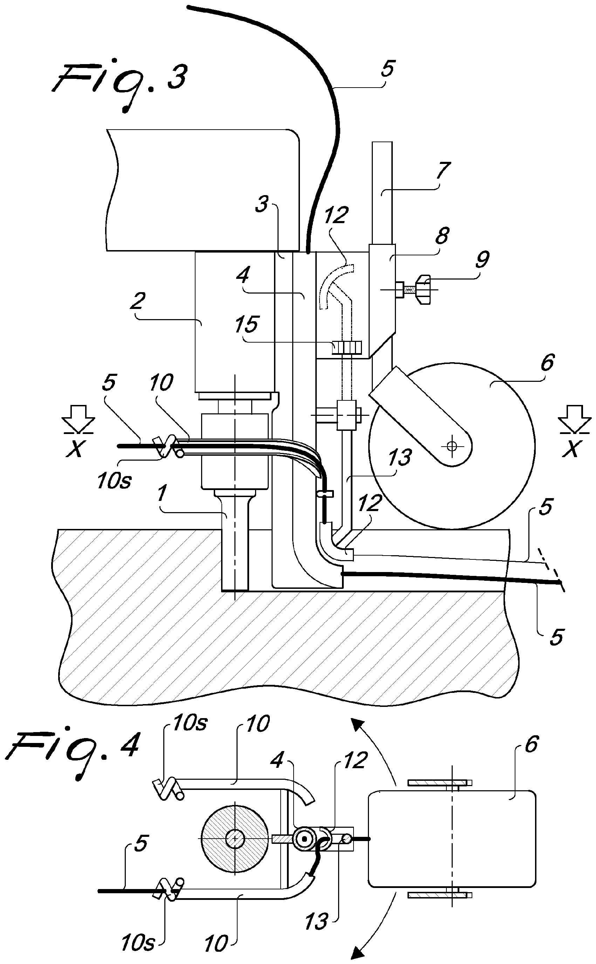

Figure 8 shows the cutter, in the configuration of Figure 3 and returning to the external perimeter of the lawn, that has buried the portion DA together with the portion BC located on the same path and previously left above ground.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine that can move on wheels, comprising a motorized cutter (1) which can rotate with respect to its own vertical axis, containment means (2) for containing transmission elements which are integral with said motorized cutter (1), supporting means (3) for means (4) for feeding and dispensing a wire or a cable (5) which can rotate freely about the axis of the motorized cutter (1), and a roller (6) having a horizontal axis for the adjustment of a height of said motorized cutter (1) with respect to a ground and therefore of a depth of a trench generated by said motorized cutter (1), and for covering said trench with an adjacent soil displaced by said motorized cutter (1) and accumulated in the vicinity of said trench, said wire or cable (5) being accommodated and conveyed by said machine, **characterized in that** the machine further comprises, at the sides of an assembly constituted by said containment means (2) of the transmission elements and by supporting means (3) for the means (4) for feeding and dispensing the wire or cable (5), two sliding guides (10), which can rotate freely about the axis of the motorized cutter (1), for the guidance and conveyance of an additional cable (5') that is already placed on the ground, said sliding guides having a C-shaped transverse profile for the lateral accommodation of a portion of said additional cable (5') that may be inserted in a component such as a spiral (10S) which is integral with each respective sliding guide (10).

2. The machine according to claim 1, **characterized in that** said two sliding guides (10) converge toward the rear part of said motorized cutter (1), therefore toward a center of the trench excavated by said motorized cutter (1), said mutual convergence of said sliding guides (10) leading the portion of additional cable (5') already placed on the walking surface, which is engaged in one of said sliding guides (10).

3. The machine according to claim 2, **characterized in that** it comprises a sliding guide (12), which is parallel and has a same curvature with respect to said feeding and dispensing means (4) for said cable (5), for said portion of the additional cable (5') that arrives from one of said two sliding guides (10), said guide (12) arranging said additional cable (5') within said trench, proximate to said cable (5).

4. The machine according to claim 3, **characterized in that** said guide (12) is fixed to a rigid arm (13) which is pivoted horizontally to said feeding and dispensing means (4) with respect to an axis (14), for respective lateral lifting upon the insertion of the portion of the cable to be buried.

5. The machine according to claim 4, **characterized in that** a retention clip (15) is fixed to at least one face of said supporting means (3), said retention clip (15) temporarily coupling said arm (13) of said guide (12) for its locking in the inactive configuration.

## Patentansprüche

1. Eine Maschine, die sich auf Rädern bewegen kann und Folgendes umfasst: eine motorisierte Schneidevorrichtung (1), die mit Bezug auf ihre eigene vertikale Achse rotieren kann, Aufnahmemittel (2) zur Aufnahme von Getriebeelementen, die integral mit der motorisierten Schneidevorrichtung (1) sind, tragende Mittel (3) für Mittel (4) zum Zuführen und Abgeben eines Drahts oder Kabels (5), die sich frei um die Achse der motorisierten Schneidevorrichtung (1) drehen können, und eine Walze (6) mit einer horizontalen Achse für die Anpassung einer Höhe der motorisierten Schneidevorrichtung (1) mit Bezug auf einen Boden und somit einer Tiefe eines mit der motorisierten Schneidevorrichtung (1) erzeugten Grabens, und für das Abdecken des Grabens mit angrenzender Erde, die von der motorisierten Schneidevorrichtung (1) versetzt wurde und sich in der Umgebung des Grabens angesammelt hat; wobei der Draht oder das Kabel (5) in der Maschine untergebracht ist und von ihr gefördert wird; **dadurch gekennzeichnet, dass** die Maschine weiter, an den Seiten eines Aufbaus, der aus den Aufnahmemitteln (2) der Getriebeelemente und aus tragenden Mitteln (3) für die Mittel (4) zum Zuführen und Abgeben des Drahts oder Kabels (5) besteht, zwei Gleitführungen (10) umfasst, die sich frei um die Achse der motorisierten Schneidevorrichtung (1) drehen können, zur Führung und Beförderung eines zusätzlichen Kabels (5'), das bereits auf den Boden gelegt ist, wobei die Gleitführungen ein C-förmiges transversales Profil für die seitliche Aufnahme eines Abschnitts des zusätzlichen Kabels (5') haben, der in eine Komponente wie z. B. eine Spirale (10S) eingeführt werden kann, welche integral mit jeder entsprechenden Gleitführung (10) ist.

2. Die Maschine gemäß Anspruch 1, **dadurch gekennzeichnet, dass** die beiden Gleitführungen (10) zum hinteren Teil der motorisierten Schneidevorrichtung (1), d. h. zu einer Mitte des Grabens hin, der von der motorisierten Schneidevorrichtung (1) ausgehoben wurde, zusammenlaufen, wobei die Konvergenz der Gleitführungen (10) zueinander den Abschnitt zusätzlichen Kabels (5') führt, der bereits auf die Bodenoberfläche gelegt wurde und der in einer der Gleitführungen (10) gehalten ist.

3. Die Maschine gemäß Anspruch 2, **dadurch gekennzeichnet, dass** sie eine Gleitführung (12) umfasst, die parallel zu den Zuführungs- und Abgabemitteln (4) für das Kabel (5) ist und eine selbe Krümmung mit Bezug auf diese hat; wobei für den Abschnitt des zusätzlichen Kabels (5'), das von einer der zwei Gleitführungen (10) kommt, die Führung (12) das zusätzliche Kabel (5') innerhalb des Grabens, in der Nähe des Kabels (5), anordnet.

4. Die Maschine gemäß Anspruch 3, **dadurch gekennzeichnet, dass** die Führung (12) an einem starren Arm (13) befestigt ist, welcher drehgelenkig horizontal mit Bezug auf eine Achse (14) mit den Zuführungs- und Abgabemitteln (4) verbunden ist, zur entsprechenden seitlichen Anhebung beim Einsetzen des Abschnitts des einzugrabenden Kabels.

5. Die Maschine gemäß Anspruch 4, **dadurch gekennzeichnet, dass** eine Halteklemme (15) an mindestens einer Seite der tragenden Mittel (3) befestigt ist, wobei die Halteklemme (15) den Arm (13) der Führung (12) zwecks seiner Arretierung in der inaktiven Konfiguration vorübergehend anschließt.

## Revendications

1. Machine pouvant se déplacer sur des roues, comprenant un outil de coupe motorisé (1) qui peut tourner par rapport à son propre axe vertical, des moyens formant contenant (2) pour contenir des éléments de transmission qui sont d'un seul bloc avec ledit outil de coupe motorisé (1), des moyens de support (3) pour des moyens (4) d'alimentation et de distribution d'un fil ou câble (5) qui peuvent tourner librement autour de l'axe de 1' outil de coupe motorisé (1), et une roulette (6) ayant un axe horizontal pour le réglage d'une hauteur dudit outil de coupe motorisé (1) par rapport à un sol et donc d'une profondeur d'une tranchée générée par ledit outil de coupe motorisé (1), et pour couvrir ladite tranchée avec un sol adjacent déplacé par ledit outil de coupe motorisé (1) et accumulé au voisinage de ladite tranchée, ledit fil ou câble (5) étant accueilli et convoyé par ladite machine, **caractérisée en ce que** la machine comprend en outre, sur les côtés d'un ensemble constitué par lesdits moyens formant contenant (2) des éléments de transmission et par des moyens de support (3) pour les moyens (4) d'alimentation et de distribution du fil ou câble (5), deux guides coulissants (10), qui peuvent tourner librement autour de l'axe de l'outil de coupe motorisé (1), pour le guidage et le convoyage d'un câble supplémentaire (5') qui est déjà placé sur le sol, lesdits guides coulissants ayant un profil transversal en forme de C pour l'accueil latéral d'une partie dudit câble supplémentaire (5') qui peut être inséré dans un composant comme une spirale (10S) qui est d'un seul bloc avec chaque guide coulissant (10) respectif.

2. Machine selon la revendication 1, **caractérisée en ce que** lesdits deux guides coulissants (10) convergent vers la partie arrière dudit outil de coupe motorisé (1), et ainsi vers un centre de la tranchée excavée par ledit outil de coupe motorisé (1), ladite convergence mutuelle desdits guides coulissants (10) guidant la partie de câble supplémentaire (5') déjà placée sur la surface d'avance, qui est en prise dans l'un desdits guides coulissants (10).

3. Machine selon la revendication 2, **caractérisée en ce qu'**elle comprend un guide coulissant (12), qui est parallèle et a une même courbure par rapport auxdits moyens (4) d'alimentation et de distribution dudit câble (5), pour ladite partie du câble supplémentaire (5') qui arrive depuis un desdits deux guides coulissants (10), ledit guide (12) agençant ledit câble supplémentaire (5') dans ladite tranchée, à proximité dudit câble (5).

4. Machine selon la revendication 3, **caractérisée en ce que** ledit guide (12) est fixé sur un bras rigide (13) qui est pivoté horizontalement sur lesdits moyens (4) d'alimentation et de distribution par rapport à un axe (14), pour un soulèvement latéral respectif lors de l'insertion de la partie du câble à enterrer.

5. Machine selon la revendication 4, **caractérisée en ce qu'**un clip de retenue (15) est fixée sur au moins une face desdits moyens de support (3), ledit clip de retenue (15) couplant temporairement ledit bras (13) dudit guide (12) pour son blocage en configuration inactive.
